# DEMANDE DE BREVET EUROPEEN

(11) **EP 3 910 780 A1**
(43) Date de publication de la demande: **17.11.2021**
(21) Numéro de dépôt: 21173804.2
(22) Date de dépôt: 14.05.2021
(51) Int. Cl.: H02M 3/335, E06B 9/68, E06B 9/32

(54) **DISPOSITIF D'ALIMENTATION ÉLECTRIQUE, ACTIONNEUR ÉLECTROMÉCANIQUE COMPORTANT UN TEL DISPOSITIF D'ALIMENTATION ÉLECTRIQUE, INSTALLATION DE FERMETURE, D'OCCULTATION OU DE PROTECTION SOLAIRE COMPRENANT UN TEL ACTIONNEUR ÉLECTROMÉCANIQUE**

(30) Priorité: 15.05.2020 FR 2004862
(71) Demandeur: Somfy Activites SA, 74300 Cluses (FR)
(72) Inventeur: ROBIN, Serge, 74300 CLUSES (FR)
(74) Mandataire: Lavoix

(57) **Abrégé**

Un dispositif d'alimentation électrique (200 ; 200') comprend :
-un convertisseur de puissance (210; 210') alternatif-continu à commutation, comprenant au moins un interrupteur de puissance (214) ; et
- une sortie (222), connectée en sortie du convertisseur de puissance.

Le dispositif d'alimentation électrique comprend, en outre, au moins un dispositif de régulation (230), comprenant au moins :
- un capteur (232) configuré pour mesurer une grandeur électrique associée à la sortie (222) ; et
- un circuit de commande (234) configuré pour :
- déterminer automatiquement une fréquence de commutation en fonction de la grandeur électrique mesurée par le capteur ; et
- commuter ledit au moins un interrupteur de puissance avec la fréquence de commutation déterminée.

## Description

La présente invention concerne un dispositif d'alimentation électrique pour un actionneur électromécanique, autrement dit un dispositif d'alimentation électrique d'un actionneur électromécanique.

La présente invention concerne également un actionneur électromécanique pour une installation de fermeture, d'occultation ou de protection solaire comprenant un tel dispositif d'alimentation électrique, ainsi qu'une installation de fermeture, d'occultation ou de protection solaire comprenant un écran entraîné en déplacement par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà des actionneurs électromécaniques qui comportent un dispositif d'alimentation électrique destiné à fournir une alimentation électrique stabilisée pour piloter l'actionneur électromécanique.

De plus en plus d'installations et de dispositifs d'occultation sont capables de communiquer au moyen d'une liaison radio sans fil, de sorte qu'il est désormais nécessaire d'équiper les actionneurs électromécaniques avec des modules de communication compatibles avec un ou plusieurs protocoles de communication radiofréquence.

Cependant, ces modules de communication augmentent la consommation électrique des actionneurs électromécaniques et, de surcroît, ont besoin d'être alimentés avec une tension électrique stable et présentant des caractéristiques bien spécifiques.

Les dispositifs d'alimentation électrique doivent donc être modifiés pour répondre à ces nouveaux besoins. Il est cependant primordial que de tels dispositifs d'alimentation électrique restent simples et peu coûteux à concevoir et à produire, qu'ils présentent un rendement énergétique satisfaisant et que leur consommation électrique dans un mode de veille reste faible, par exemple que leur consommation en veille reste inférieure à 0,5 Watt.

On connaît également le document US 2017/0201181 A1 qui décrit un dispositif d'alimentation électrique comprenant un convertisseur de puissance alternatif-continu à commutation, une sortie et un dispositif de régulation. Le convertisseur de puissance comprend un interrupteur de puissance. La sortie est connectée en sortie du convertisseur de puissance. Le dispositif de régulation comprend un capteur et un circuit de commande. Le capteur est configuré pour mesurer une grandeur électrique associée à la sortie. Le circuit de commande est configuré pour déterminer automatiquement une fréquence de commutation en fonction de la grandeur électrique mesurée par le capteur, pour commuter l'interrupteur de puissance avec la fréquence de commutation déterminée, et pour déterminer la fréquence de commutation en identifiant, parmi une pluralité d'intervalles prédéterminés de valeurs de la grandeur électrique, l'intervalle prédéterminé à l'intérieur duquel la grandeur électrique mesurée est comprise, chaque intervalle prédéterminé étant associé à une valeur de fréquence de commutation, la fréquence de commutation déterminée étant celle associée à l'intervalle prédéterminé identifié. Parmi les intervalles prédéterminés, un premier intervalle prédéterminé correspond à des valeurs de la grandeur mesurée faibles et étant associé à une première valeur de fréquence de commutation, et un deuxième intervalle prédéterminé correspond à des valeurs de la grandeur mesurée élevées et étant associé à une deuxième valeur de fréquence de commutation, la deuxième valeur de fréquence de commutation étant supérieure à la première valeur de fréquence de commutation.

La fréquence de commutation du ou des interrupteurs de puissance est fixe. Seule une adaptation est mise en œuvre par un signal de type PWM (acronyme du terme anglo-saxon Pulse Width Modulation) généré par un microcontrôleur. Un tel fonctionnement du dispositif d'alimentation électrique est simple à mettre en œuvre mais présente un mauvais rendement.

On connaît également les documents US 2016/0156271 A1, US 2013/0141947 A1 et US 2016/0359418 A1 qui décrivent respectivement un dispositif d'alimentation électrique similaire à celui du document US 2017/0201181 A1.

Par conséquent, ces solutions présentent cependant un mauvais rendement énergétique. Leur consommation électrique reste élevée, même lorsque l'actionneur électromécanique est en mode veille. Elles sont de surcroît relativement coûteuses à fabriquer.

La présente invention a pour but de résoudre les inconvénients précités et de proposer un dispositif d'alimentation électrique pour un actionneur électromécanique, un actionneur électromécanique pour une installation de fermeture, d'occultation ou de protection solaire comprenant un tel dispositif d'alimentation électrique, ainsi qu'une installation de fermeture, d'occultation ou de protection solaire comprenant un tel actionneur électromécanique, permettant d'alimenter en énergie électrique l'actionneur électromécanique et, plus particulièrement, un module de communication associé, tout en restant simple et peu coûteux à fabriquer et présentant un rendement énergétique satisfaisant.

A cet égard, la présente invention vise, selon un premier aspect, un dispositif d'alimentation électrique pour un actionneur électromécanique,
le dispositif d'alimentation électrique comprenant au moins :
- un convertisseur de puissance alternatif-continu à commutation, le convertisseur de puissance comprenant au moins un interrupteur de puissance ;
- une sortie, la sortie étant connectée en sortie du convertisseur de puissance ; et
- un dispositif de régulation ;
le dispositif de régulation comprenant au moins :
- un capteur, le capteur étant configuré pour mesurer une grandeur électrique associée à la sortie ; et
- un circuit de commande.

En outre, le circuit de commande est configuré pour :
- déterminer automatiquement une fréquence de commutation en fonction de la grandeur électrique mesurée par le capteur ;
- commuter ledit au moins un interrupteur de puissance avec la fréquence de commutation déterminée ; et
- déterminer la fréquence de commutation en identifiant, parmi une pluralité d'intervalles prédéterminés de valeurs de la grandeur électrique, l'intervalle prédéterminé à l'intérieur duquel la grandeur électrique mesurée est comprise, chaque intervalle étant associé à une valeur de fréquence de commutation, la fréquence de commutation déterminée étant celle associée à l'intervalle prédéterminé identifié.

Parmi les intervalles prédéterminés,
- un premier intervalle prédéterminé correspond à des valeurs de la grandeur mesurée faibles et est associé à une première valeur de fréquence de commutation, et
- un deuxième intervalle prédéterminé correspond à des valeurs de la grandeur mesurée élevées et est associé à une deuxième valeur de fréquence de commutation, la deuxième valeur de fréquence de commutation étant supérieure à la première valeur de fréquence de commutation.

Selon l'invention, au moins un intervalle additionnel prédéterminé est défini, l'intervalle additionnel prédéterminé étant associé à une courbe de réponse prédéfinie de rendement énergétique associant des valeurs de la grandeur mesurée à des valeurs de fréquence de commutation. En outre, le circuit de commande est configuré, lorsque l'intervalle additionnel prédéterminé est identifié comme correspondant à la valeur de la grandeur mesurée, pour déterminer la fréquence de commutation à partir de la courbe de réponse prédéfinie associée audit intervalle additionnel prédéterminé.

Ainsi, un tel dispositif d'alimentation électrique permet d'optimiser son rendement. Cette optimisation de rendement est obtenue par la modification de la fréquence de commutation du ou des interrupteurs de puissance, de sorte à adapter la quantité d'énergie électrique entre une entrée et la sortie du dispositif d'alimentation électrique et à limiter les pertes en conduction et en commutation.

Selon une caractéristique avantageuse de l'invention, l'intervalle additionnel prédéterminé est intercalé entre le premier intervalle prédéterminé et le deuxième intervalle prédéterminé.

Selon une autre caractéristique avantageuse de l'invention, la grandeur électrique est un courant électrique consommé débité sur la sortie. En outre, le capteur est un capteur de courant, le capteur de courant étant configuré pour mesurer le courant électrique consommé débité sur la sortie.

Selon une autre caractéristique avantageuse de l'invention, le premier intervalle prédéterminé correspond à des valeurs de courant inférieures ou égales à 1 milliampère.

Selon une autre caractéristique avantageuse de l'invention, le deuxième intervalle prédéterminé correspond à des valeurs de courant supérieures ou égales à 500 milliampères.

Selon une autre caractéristique avantageuse de l'invention, la grandeur électrique est une tension électrique de la sortie. En outre, le capteur est un capteur de tension, le capteur étant configuré pour mesurer une tension électrique de sortie fournie à la sortie.

Selon une autre caractéristique avantageuse de l'invention, le convertisseur de puissance est un convertisseur flyback ou un convertisseur flybuck.

La présente invention vise, selon un deuxième aspect, un actionneur électromécanique pour une installation de fermeture, d'occultation ou de protection solaire comprenant un dispositif d'alimentation électrique conforme à l'invention.

Cet actionneur électromécanique présente des caractéristiques et avantages analogues à ceux décrits précédemment en relation avec le dispositif d'alimentation électrique selon l'invention, tel que mentionné ci-dessus.

La présente invention vise, selon un troisième aspect, une installation de fermeture, d'occultation ou de protection solaire comprenant un écran entraîné en déplacement par un actionneur électromécanique conforme à l'invention.

Cette installation présente des caractéristiques et avantages analogues à ceux décrits précédemment en relation avec l'actionneur électromécanique selon l'invention, tel que mentionné ci-dessus.

D'autres particularités et avantages de l'invention apparaîtront encore dans la description ci-après.

Aux dessins annexés, donnés à titre d'exemples non limitatifs :
[Fig 1] la figure 1 est une vue schématique en coupe transversale d'une installation conforme à un premier mode de réalisation de l'invention ;
[Fig 2] la figure 2 est une vue schématique en perspective de l'installation illustrée à la figure 1 ;
[Fig 3] la figure 3 est une vue schématique en coupe axiale et partielle de l'installation illustrée aux figures 1 et 2, montrant, entre autres, un actionneur électromécanique de l'installation ;
[Fig 4] la figure 4 est un schéma électrique d'un dispositif d'alimentation électrique de l'actionneur électromécanique illustré à la figure 3, selon le premier mode de réalisation de l'invention ;
[Fig 5] la figure 5 est un schéma électrique d'un dispositif d'alimentation électrique de l'actionneur électromécanique illustré à la figure 3, selon un deuxième mode de réalisation de l'invention ; et
[Fig 6] la figure 6 est un diagramme illustrant un procédé de fonctionnement du dispositif d'alimentation électrique de la figure 4 ou de la figure 5 selon des modes de mise en œuvre de l'invention.

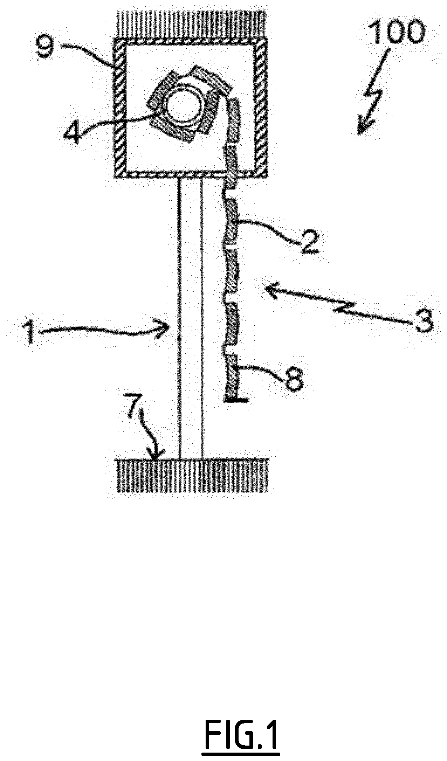

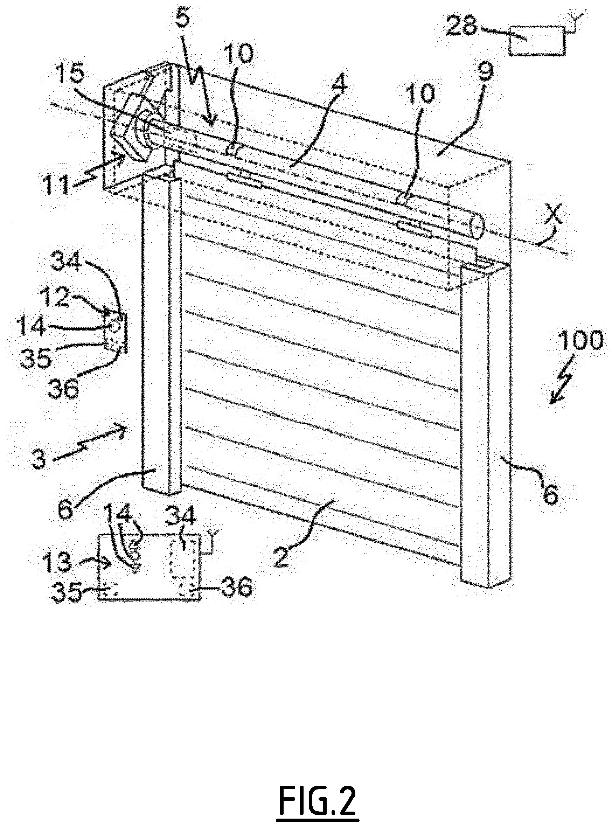

On décrit tout d'abord, en référence aux figures 1 et 2, une installation 100 conforme à un premier mode de réalisation de l'invention et installée dans un bâtiment comportant une ouverture 1, fenêtre ou porte, équipée d'un écran 2 appartenant à un dispositif de fermeture, d'occultation ou de protection solaire 3, en particulier un volet roulant motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un volet roulant, un store en toile ou avec des lames orientables, ou encore un portail roulant. La présente invention s'applique à tous les types de dispositif d'occultation.

Ici, l'installation 100 comprend le dispositif d'occultation 3.

On décrit, en référence aux figures 1 et 2, un volet roulant conforme au premier mode de réalisation de l'invention.

L'écran 2 du dispositif d'occultation 3 est enroulé sur un tube d'enroulement 4 entraîné par un dispositif d'entraînement motorisé 5. L'écran 2 est mobile entre une position enroulée, en particulier haute, et une position déroulée, en particulier basse.

Ici, l'installation 100 comprend le dispositif d'entraînement motorisé 5.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 peut être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à déplacer, en particulier dérouler ou enrouler, l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déplacement, notamment de déroulement ou d'enroulement, de l'écran 2 du dispositif d'occultation 3, pouvant être émises, notamment, par l'unité de commande locale 12 ou l'unité de commande centrale 13.

L'installation 100 comprend soit l'unité de commande locale 12, soit l'unité de commande centrale 13, soit l'unité de commande locale 12 et l'unité de commande centrale 13.

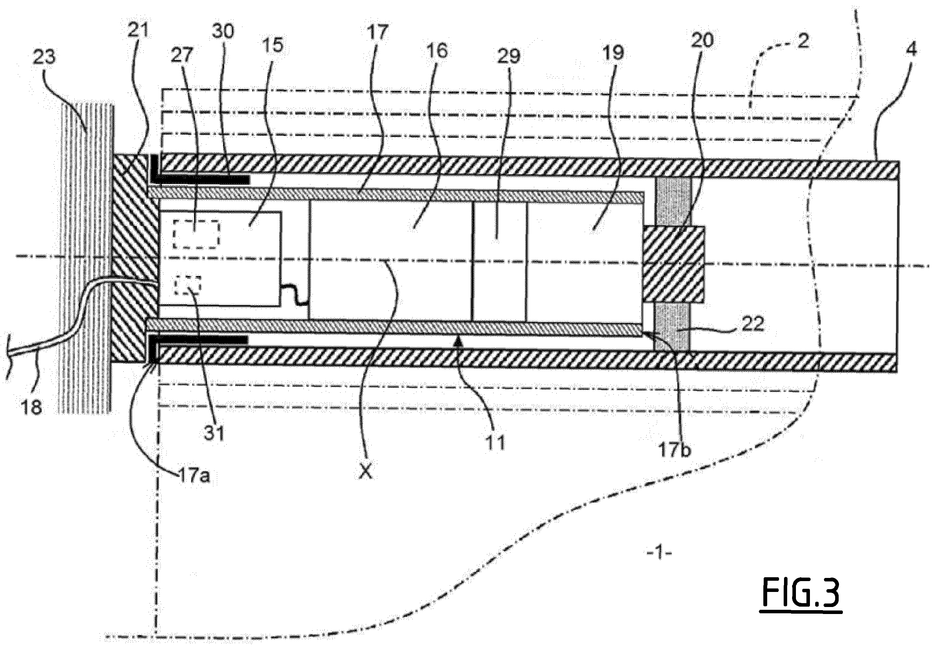

On décrit à présent, plus en détail et principalement en référence à la figure 3, le dispositif d'entraînement motorisé 5, y compris l'actionneur électromécanique 11, appartenant à l'installation 100 des figures 1 et 2.

L'actionneur électromécanique 11 comprend un moteur électrique 16.

Le moteur électrique 16 comprend au moins un stator et un rotor, non représentés.

Ici, le stator et le rotor sont positionnés de manière coaxiale autour d'un axe de rotation X, qui est également l'axe de rotation du tube d'enroulement 4 en configuration montée du dispositif d'entraînement motorisé 5.

Ainsi, dans une configuration assemblée du moteur électrique 16, le rotor est configuré pour être monté, autrement dit est monté, mobile en rotation par rapport au stator.

Des moyens de commande de l'actionneur électromécanique 11, permettant le déplacement de l'écran 2 du dispositif d'occultation 3, sont constitués par au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

Avantageusement, l'unité électronique de contrôle 15 comprend au moins un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique, non représentée, déportée à l'extérieur du bâtiment, incluant, notamment, un ou plusieurs capteurs pouvant être configurés pour déterminer, par exemple, une température, une luminosité ou encore une vitesse de vent.

Avantageusement, l'unité électronique de contrôle 15, l'unité de commande locale 12 et/ou l'unité de commande centrale 13 peuvent également être en communication avec un serveur 28, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 ou centrale 13. L'unité de commande locale 12 ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs ou des touches sensitives. Les éléments d'affichage peuvent comprendre des diodes électroluminescentes, un afficheur LCD (acronyme du terme anglais « Liquid Crystal Display ») ou TFT (acronyme du terme anglais « Thin Film Transistor »). Les éléments de sélection et d'affichage peuvent également être réalisés au moyen d'un écran tactile.

Avantageusement, l'unité de commande locale 12 ou centrale 13 comprend un contrôleur 35.

Avantageusement, l'unité de commande locale 12 ou centrale 13 comprend également au moins un deuxième module de communication 36.

Ainsi, le deuxième module de communication 36 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant d'une fenêtre ou d'une porte. Un point de commande nomade peut être une télécommande, un téléphone intelligent ou une tablette.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur et/ou à un signal provenant d'une horloge de l'unité électronique de contrôle 15, en particulier du microcontrôleur 31. Le capteur et/ou l'horloge peuvent être intégrés à l'unité de commande locale 12 ou à l'unité de commande centrale 13.

L'actionneur électromécanique 11 est alimenté en énergie électrique par une source d'alimentation en énergie électrique, pouvant être soit un réseau d'alimentation électrique du secteur soit une batterie, non représentée, pouvant être rechargée, par exemple, par un panneau photovoltaïque, non représenté.

Ici, l'actionneur électromécanique 11 comprend un câble d'alimentation électrique 18 permettant son alimentation en énergie électrique à partir de la source d'alimentation en énergie électrique.

Avantageusement, l'actionneur électromécanique 11 comprend un carter 17.

Ici, le carter 17 de l'actionneur électromécanique 11 est de forme cylindrique.

La forme du carter de l'actionneur électromécanique n'est pas limitative et peut être différente. Elle peut être, par exemple, de forme parallélépipédique.

Avantageusement, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend, en outre, un réducteur 19.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Avantageusement, l'actionneur électromécanique 11 comprend, en outre, un frein 29 et un arbre de sortie 20.

A titre d'exemple nullement limitatif, le frein 29 peut être un frein à ressort, un frein à came, un frein magnétique ou un frein électromagnétique.

Ici et comme visible à la figure 3, dans une configuration assemblée de l'actionneur électromécanique 11, le frein 29 est configuré pour être disposé, autrement dit est disposé, entre le moteur électrique 16 et le réducteur 19, c'est-à-dire à la sortie du moteur électrique 16.

En variante, non représentée, dans la configuration assemblée de l'actionneur électromécanique 11, le frein 29 est configuré pour être disposé, autrement dit est disposé, entre l'unité électronique de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

Avantageusement, dans la configuration assemblée de l'actionneur électromécanique 11, le moteur électrique 16, le frein 29 et le réducteur 19 sont configurés pour être montés, autrement dit sont montés, à l'intérieur du carter 17 de l'actionneur électromécanique 11.

Avantageusement, l'actionneur électromécanique 11 peut, en outre, comprendre un dispositif de détection de fin de course et/ou d'obstacle, pouvant être mécanique ou électronique.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne 30 insérée autour d'une première extrémité 17a du carter 17 de l'actionneur électromécanique 11. La couronne 30 constitue, autrement dit est configurée pour constituer, un palier de guidage en rotation du tube d'enroulement 4, dans une configuration assemblée du dispositif d'occultation 3. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend, en outre, un support de couple 21, pouvant également être appelé «tête d'actionneur ». Dans la configuration assemblée de l'actionneur électromécanique 11, le support de couple 21 est configuré pour être disposé, autrement dit est disposé, au niveau de la première extrémité 17a du carter 17 de l'actionneur électromécanique 11.

Le support de couple 21 permet de reprendre les efforts exercés par l'actionneur électromécanique 11 et, notamment, d'assurer la reprise des efforts exercés par l'actionneur électromécanique 11, en particulier le couple exercé par l'actionneur électromécanique 11, par un bâti 23. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par le bâti 23.

Ainsi, le support de couple 21 de l'actionneur électromécanique 11 permet de fixer l'actionneur électromécanique 11 sur le bâti 23, en particulier à une joue du coffre 9.

Avantageusement, dans la configuration assemblée de l'actionneur électromécanique 11, le support de couple 21 est en saillie au niveau de la première extrémité 17a du carter 17 de l'actionneur électromécanique 11, en particulier l'extrémité 17a du carter 17 recevant la couronne 30.

Avantageusement, le support de couple 21 de l'actionneur électromécanique 11 peut également permettre d'obturer la première extrémité 17a du carter 17.

Par ailleurs, le support de couple 21 de l'actionneur électromécanique 11 peut permettre de supporter au moins une partie de l'unité électronique de contrôle 15.

Avantageusement, l'unité électronique de contrôle 15 peut être alimentée en énergie électrique au moyen du câble d'alimentation électrique 18.

Ici et tel qu'illustré à la figure 3, l'unité électronique de contrôle 15 est ainsi disposée, autrement dit intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le bâti 23 ou dans le support de couple 21.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison 22 relié au tube d'enroulement 4. L'élément de liaison 22 est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

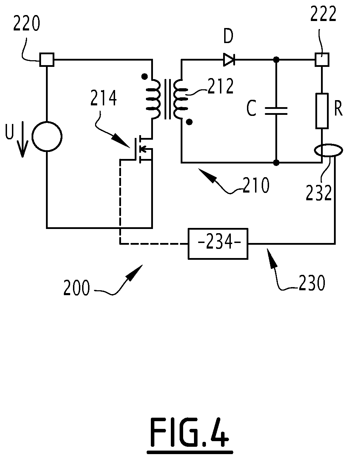

On décrit à présent, en référence à la figure 4, un dispositif d'alimentation électrique 200 de l'actionneur électromécanique 11 conforme au premier mode de réalisation de l'invention.

Avantageusement, le dispositif d'alimentation électrique 200 est configuré pour alimenter en énergie électrique, autrement dit alimente en énergie électrique, l'actionneur électromécanique 11, par exemple en alimentant l'unité électronique de contrôle 15 et en pilotant ou en régulant la tension d'alimentation fournie en entrée du moteur électrique 16.

Ici, le moteur électrique 16 est de type sans balais à commutation électronique, appelé également « BLDC » (acronyme du terme anglais BrushLess Direct Current) ou « synchrone à aimants permanents ».

Selon des exemples d'implémentation, le dispositif d'alimentation électrique 200 peut être associé à l'unité électronique de contrôle 15, ou être compris dans l'unité électronique de contrôle 15, ou n'être qu'un élément ou un sous-ensemble d'un circuit d'alimentation électrique de l'actionneur électromécanique 11. Par exemple, le dispositif d'alimentation électrique 200 est logé dans le tube d'enroulement 4 et/ou est fixé sur le support de couple 21.

Ici, le dispositif d'alimentation électrique 200 comprend au moins une entrée 220.

L'entrée 220 du dispositif d'alimentation électrique 200 est configurée pour recevoir, autrement dit reçoit, une tension électrique d'entrée U, la tension électrique d'entrée U étant fournie par une source d'alimentation en énergie électrique, qui en pratique peut être la même que celle alimentant en énergie électrique l'actionneur électromécanique 11. Par exemple, l'entrée 220 du dispositif d'alimentation électrique 200 est connectée électriquement au câble d'alimentation électrique 18.

Comme illustré sur la figure 4, le dispositif d'alimentation électrique 200 comprend au moins une sortie 222.

La sortie 222 du dispositif d'alimentation électrique 200, pouvant également être appelée sortie principale ou sortie de puissance, est configurée pour délivrer, autrement dit délivre, une tension électrique de sortie. Cette tension électrique de sortie est configurée pour commander, autrement dit commande, l'alimentation en énergie électrique d'un ou plusieurs organes de commande du moteur électrique 16, tels que, par exemple, un ou plusieurs interrupteurs, notamment des interrupteurs de puissance ou des relais.

Avantageusement, l'actionneur électromécanique 11 comporte ou est associé à un circuit d'alimentation électrique, non illustré, dont l'entrée est raccordée à la source d'alimentation électrique de l'actionneur électromécanique 11, par exemple par l'intermédiaire du câble d'alimentation électrique 18, et dont la sortie est raccordée à une ou plusieurs bornes d'alimentation électrique du moteur électrique 16.

Le circuit d'alimentation électrique peut comporter un ou plusieurs interrupteurs, notamment des interrupteurs de puissance ou des relais, qui sont commandés par la tension électrique de sortie délivrée sur la sortie 222 du dispositif d'alimentation électrique 200.

Par exemple, le circuit d'alimentation électrique est un circuit d'alimentation à découpage ou un module intégré de type IPM (acronyme du terme anglais « Integrated Power Module ») chargé de mettre en oeuvre une modulation de largeur d'impulsions en fonction d'ordres de commande envoyés par l'unité électronique de contrôle 15.

En d'autres termes, le circuit d'alimentation électrique fournit la puissance électrique nécessaire pour alimenter en énergie électrique le moteur électrique 16 et la tension électrique de sortie sert à commander des éléments de ce circuit d'alimentation électrique pour que ce dernier fournisse la puissance électrique souhaitée.

Le dispositif d'alimentation électrique 200 comprend au moins un convertisseur de puissance 210 alternatif-continu à commutation, en particulier à découpage, dont l'entrée est connectée à l'entrée 220 et dont la sortie est connectée à la sortie 222.

Dans ce premier mode de réalisation, le convertisseur de puissance 210 est un convertisseur de type « flyback ».

Par exemple, le convertisseur de puissance 210 comporte des enroulements 212 primaire et secondaire.

Le convertisseur de puissance 210 comprend au moins un interrupteur de puissance 214.

De façon générale, l'interrupteur de puissance 214 est destiné à être cycliquement commuté entre un état ouvert et un état fermé avec une fréquence de commutation prédéterminée, afin de participer à la transformation de la tension électrique alternative, notée U, reçue en entrée en une tension électrique continue.

Par exemple, l'interrupteur de puissance 214 est un transistor ou un thyristor.

Le dispositif d'alimentation électrique 200 peut également comporter des circuits de filtrage, par exemple une diode D et un condensateur C placés en sortie du convertisseur de puissance 210.

La résistance R représente ici la charge électrique connectée à la sortie 222.

La topologie d'alimentation à découpage de type flyback, utilisée pour les alimentations de faible puissance, est basée sur une architecture à transformateur isolé et permet de stocker de l'énergie au primaire puis de la restituer au secondaire avec une capacité « réservoir ». La diode commute automatiquement à chaque période pour transférer l'énergie.

Le dispositif d'alimentation électrique 200 comprend, en outre, un dispositif de régulation 230. Le dispositif de régulation comprend au moins un capteur 232 et un circuit de commande 234. Le circuit de commande est configuré pour, ou est apte à, piloter, autrement dit pilote, le dispositif de régulation 230.

Dans ce premier mode de réalisation, le capteur 232 est un capteur de courant. Le capteur 232 est configuré pour mesurer, autrement dit mesure, le courant électrique consommé débité sur la sortie 222.

Par exemple, une entrée du circuit de commande 234 est connectée au capteur 232 et une sortie du circuit de commande 234 est connectée à une électrode de commande de l'interrupteur de puissance 214.

Le capteur 232 est configuré pour mesurer, autrement dit mesure, le courant électrique instantané consommé par le ou les éléments électriques connectés à la sortie 222.

Le circuit de commande 234 est configuré pour déterminer, autrement dit détermine, une fréquence de commutation du convertisseur de puissance 210 en fonction du courant électrique mesuré par le capteur 232. En outre, le circuit de commande 234 est configuré pour piloter ou commander, autrement dit pilote ou commande, l'interrupteur de puissance 214 avec la fréquence de commutation déterminée.

Dans l'exemple illustré à la figure 4, le convertisseur de puissance 210 ne comprend qu'un seul interrupteur de puissance 214.

Néanmoins, dans des modes de réalisation alternatifs où le convertisseur de puissance 210 comprend plusieurs interrupteurs de puissance 214, le circuit de commande 234 est capable de piloter plusieurs interrupteurs de puissance 214 à la fréquence de commutation déterminée.

Selon des exemples de mise en œuvre, le circuit de commande 234 est implémenté par un ou plusieurs circuits électroniques.

Par exemple, le circuit de commande 234 comporte un processeur, tel qu'un microcontrôleur programmable ou un microprocesseur, et une mémoire.

En variante, le circuit de commande 234 peut comporter un processeur de commande du signal, notamment de type DSP (acronyme du terme anglais « Digital Signal Processor »), un composant logique reprogrammable, notamment de type FPGA (acronyme du terme anglais « Field Programmable Gâte Arrays »), un circuit intégré spécialisé, notamment de type ASIC (acronyme du terme anglais « Application Specific Integrated Circuit ») ou tout autre élément équivalent.

Dans certaines variantes, le circuit de commande 234 peut être implémenté au moins en partie par l'unité électronique de contrôle 15.

De façon générale, le circuit de commande 234 est configuré pour mettre en œuvre, autrement dit met en œuvre, des étapes consistant à :
- déterminer automatiquement une fréquence de commutation en fonction du courant électrique mesuré par le capteur 232 ; et
- commuter le ou les interrupteurs de puissance 214 avec la fréquence de commutation déterminée.

Par exemple, initialement, une pluralité d'intervalles prédéterminés de valeurs de courant sont définis. Chaque intervalle prédéterminé est associé à une valeur de fréquence de commutation.

Cette définition peut être faite en usine par le fabriquant du dispositif d'alimentation électrique 200. En pratique, ces intervalles prédéterminés peuvent être enregistrés dans une mémoire du dispositif de régulation 230.

Puis, une fois le courant électrique mesuré par le capteur 232, la fréquence de commutation est déterminée en identifiant, parmi ces intervalles prédéterminés, un intervalle prédéterminé correspondant à la valeur de courant électrique mesurée par le capteur 232. La fréquence de commutation déterminée est donc celle associée à l'intervalle prédéterminé identifié.

Par exemple, la valeur de courant mesurée est comparée avec les intervalles prédéterminés et l'un des intervalles prédéterminés est sélectionné. Cela signifie que la valeur de courant électrique mesurée est comprise dans l'intervalle prédéterminé sélectionné.

Un premier intervalle prédéterminé correspond à des valeurs de courant faibles et est associé à une première valeur de fréquence de commutation. Un deuxième intervalle prédéterminé correspond à des valeurs de courant élevées et est associé à une deuxième valeur de fréquence de commutation. La deuxième valeur de fréquence de commutation est supérieure à la première valeur de fréquence de commutation.

Par « courants faibles », on désigne des courants électriques, en particulier continus, dont l'intensité est inférieure ou égale à 5 milliampères.

Selon un exemple donné à des fins d'illustration, le premier intervalle prédéterminé correspond à des valeurs de courant inférieures ou égales à 1 milliampère. En outre, le deuxième intervalle prédéterminé correspond à des valeurs de courant supérieures ou égales à 500 milliampères.

Par exemple, la première fréquence de commutation peut être inférieure à 50kHz. En outre, la deuxième fréquence de commutation peut être supérieure à 100kHz.

En pratique, les fréquences de commutation peuvent être comprises dans une plage de fréquence qui peut aller de quelques Hertz, correspondant à une alimentation quasi linéaire, pour les très faibles courants, jusqu'à plusieurs mégahertz, voire 10MHz, pour des courants plus forts. Ceci permet d'utiliser dans le dispositif d'alimentation électrique 200 des inductances de petite dimension. L'objectif est d'optimiser automatiquement les pertes en conduction et les pertes en commutation pour atteindre le rendement maximum quelles que soient les configurations de tension et de courant en sortie.

Avantageusement, la première fréquence de commutation est inférieure à 20 kHz, de sorte à éviter de générer des vibrations qui seraient perceptibles par un utilisateur humain.

Selon des modes de réalisation avantageux, la première fréquence de commutation est choisie pour que la commutation du ou des interrupteurs de puissance 214 soit mise en œuvre avec une périodicité qui est un multiple de la périodicité du signal sinusoïdal redressé. Par exemple, la commutation du ou des interrupteurs de puissance 214 est réalisée toutes les X alternances du signal sinusoïdal redressé, X étant un nombre supérieur ou égal à 1. Par exemple, le nombre X est ici égal à 2, mais en variante il pourrait être différent, par exemple égal à 3, à 4, à 5 ou à 3/2, ou encore à bien d'autres valeurs. La fréquence de commutation est alors égale à la fréquence du signal sinusoïdal redressé multiplié par l'inverse du nombre X.

Par exemple, si le signal sinusoïdal redressé est représentatif d'une tension d'alimentation à une fréquence de 50Hz, alors la fréquence de commutation peut être choisie égale à 25 Hz.

Au moins un intervalle additionnel prédéterminé est associé à une courbe de réponse prédéfinie de rendement énergétique.

La courbe de réponse associe des valeurs de fréquence de commutation à des valeurs de rendement énergétique du dispositif d'alimentation électrique 200.

En pratique, la courbe de réponse peut être définie par le constructeur de l'actionneur électromécanique 11 en fonction des composants utilisés et notamment du ou des éléments électriques connectés à la sortie 222 du dispositif d'alimentation électrique 200, afin d'assurer un rendement optimal.

La courbe de réponse peut être enregistrée dans la mémoire du circuit de commande 234, par exemple au sein d'une liste, ou d'une table, ou de toute structure de données appropriée.

Si l'intervalle additionnel prédéterminé est identifié comme correspondant à la valeur de courant mesurée, alors la fréquence de commutation est déterminée par le circuit de commande 234 à partir de la courbe de réponse prédéfinie.

Par exemple, la valeur de fréquence de commutation associée à la valeur de rendement la plus élevée est sélectionnée.

Alternativement, la valeur de fréquence de commutation associée à une valeur de rendement supérieure à un seuil prédéfini est sélectionnée.

Avantageusement, la mesure du courant électrique par le capteur 232 est répétée au cours du temps, de préférence périodiquement. Une nouvelle valeur de fréquence de commutation peut alors être définie en conséquence.

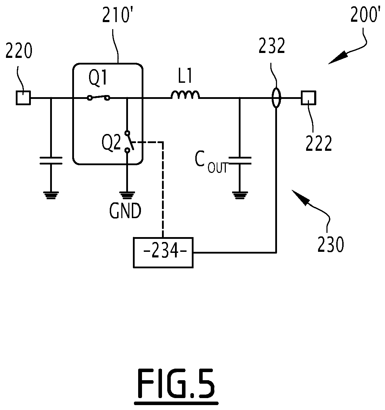

Dans le deuxième mode de réalisation, représenté à la figure 5, les éléments analogues à ceux du premier mode de réalisation portent les mêmes références et fonctionnent comme expliqué ci-dessus. Dans ce qui suit, on décrit, principalement, que ce qui distingue ce deuxième mode de réalisation du précédent. Dans ce qui suit, lorsqu'un signe de référence est utilisé sans être reproduit sur la figure 5, il correspond à l'objet portant la même référence sur l'une des figures 1 à 4.

On décrit maintenant, en référence à la figure 5, le dispositif d'alimentation électrique de l'actionneur électromécanique 11 selon le deuxième mode de réalisation de l'invention, et qui porte ici la référence 200' pour le distinguer du dispositif d'alimentation électrique 200 selon le premier mode de réalisation.

A l'instar du premier mode de réalisation, le dispositif d'alimentation électrique 200' comprend un convertisseur de puissance 210' alternatif-continu à commutation, en particulier à découpage, une entrée de tension 220, une sortie de tension 222 et un dispositif de régulation 230.

Dans ce deuxième mode de réalisation, le convertisseur de puissance 210' est un convertisseur de type « flybuck ».

Par exemple, le convertisseur de puissance 210' comprend un premier interrupteur de puissance Q1 et un deuxième interrupteur de puissance Q2, qui jouent un rôle analogue à l'interrupteur de puissance 214.

Le dispositif d'alimentation électrique 200' selon ce deuxième mode de réalisation peut aussi comporter des circuits de filtrage ou de conditionnement, par exemple une bobine L1 et un condensateur C_{OUT} placés en sortie du convertisseur de puissance 210', entre la sortie 222 et une masse électrique GND du dispositif d'alimentation électrique 200'.

La topologie d'alimentation à découpage de type Flybuck, utilisée pour les alimentations de faible puissance, utilise une inductance couplée plus simple et plus compacte qu'un transformateur et fonctionne de manière synchrone. De l'énergie électrique est stockée dans la première inductance puis celle-ci est restituée au travers d'une capacité réservoir sur une première tension et au travers d'une deuxième inductance et d'une deuxième capacité réservoir pour une deuxième tension. Les interrupteurs de puissance Q1, Q2 sont commutés alternativement pour transférer l'énergie.

Mis à part ces différences, le dispositif de régulation 230 fonctionne de façon analogue à celle définie en référence au premier mode de réalisation, en vue de commuter les interrupteurs de puissance Q1, Q2 avec une fréquence de commutation sélectionnée en fonction du courant consommé mesuré par le capteur 232.

Il convient de noter que le type de convertisseur de puissance n'est pas limitatif et que les modes de réalisation décrits ci-dessus peuvent être transposés à d'autres types de convertisseurs de puissance alternatif-continu à commutation, en particulier à découpage.

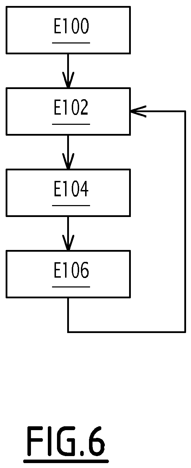

Un exemple de fonctionnement du dispositif d'alimentation électrique 200 est maintenant décrit en référence au diagramme de la figure 6.

Le procédé débute à une étape E100. A ce stade, les intervalles prédéterminés, ainsi que la courbe de réponse, le cas échéant, sont déjà définis et peuvent résider dans la mémoire du circuit de commande 234.

Lors d'une étape E102, le capteur 232 mesure une valeur de courant électrique débité par le dispositif d'alimentation électrique 200, 200'.

Puis, lors d'une étape E104, le circuit de commande 234, après avoir acquis la valeur de courant mesurée par le capteur 232, détermine une valeur de fréquence de commutation à partir de la valeur de courant mesurée.

Enfin, lors d'une étape E106, le circuit de commande 234 pilote le ou les interrupteurs de puissance 214, Q1, Q2 en les commutant cycliquement à la fréquence de commutation déterminée.

Les étapes du procédé peuvent être répétées, de préférence périodiquement, tout au long du fonctionnement du dispositif d'alimentation électrique 200, de préférence lorsque ce dernier est en mode de veille.

Grâce à la présente invention, quel que soit le mode de réalisation, la fréquence de commutation du dispositif d'alimentation électrique est automatiquement ajustée en fonction du courant instantané consommé. Ceci permet d'optimiser la consommation énergétique du dispositif d'alimentation électrique.

En effet, lorsque le courant consommé a une faible intensité, il est préférable de limiter au maximum les commutations, car ce sont elles qui créent le plus de pertes énergétiques et qui sont à l'origine d'une baisse du rendement énergétique.

A l'inverse, lorsque le courant consommé a une intensité élevée, il est souhaitable d'augmenter la fréquence de commutation pour améliorer le rendement énergétique, car, dans ce cas, les pertes énergétiques par conduction deviennent prépondérantes.

En d'autres termes, le courant électrique débité par le dispositif d'alimentation électrique, consommé par le ou les éléments électriques connectés à la sortie et servant à gérer l'alimentation de l'actionneur électromécanique, est mesuré en temps réel et la fréquence de commutation est ajustée dynamiquement et de manière rapide pour suivre au mieux les évolutions du courant de sortie.

Par comparaison, les actionneurs électromécaniques connus ont un dispositif d'alimentation électrique qui comporte un convertisseur de puissance alternatif-continu à découpage à fréquence fixe. Un tel convertisseur de puissance peut être optimisé pour présenter un bon rendement énergétique sur une plage de valeurs très restreinte de courant, par exemple au courant maximum, mais le rendement est très dégradé quand le courant consommé sort de cette plage de valeurs, par exemple lorsque le courant devient faible.

Le dispositif d'alimentation électrique selon l'invention présente ainsi un rendement énergétique plus satisfaisant et une consommation résiduelle en mode veille bien moindre que dans les dispositifs d'alimentation électrique connus.

Par exemple, la puissance électrique consommée par le dispositif d'alimentation électrique dans un mode de veille reste inférieure à 0,5 Watt, avantageusement inférieure ou égale à 0,3 Watt et préférentiellement inférieure ou égale à 0,1 Watt.

De plus, le dispositif d'alimentation électrique peut être aisément utilisé sur une large gamme d'appareils et notamment d'actionneurs électromécaniques, car les intervalles de valeurs de courant et les valeurs de fréquence de commutation associées peuvent être aisément adaptées à chaque type d'appareil en fonction de ses caractéristiques techniques.

Enfin, le dispositif d'alimentation électrique est moins coûteux à fabriquer que les dispositifs d'alimentation électrique connus, puisque le dispositif de régulation peut être implémenté de façon simple, sans avoir à modifier l'architecture du convertisseur de puissance ou du reste du dispositif d'alimentation électrique.

L'invention est ainsi particulièrement applicable à un actionneur électromécanique pour une installation de fermeture, d'occultation ou de protection solaire comprenant un tel dispositif d'alimentation électrique, ainsi qu'à une installation de fermeture, d'occultation ou de protection solaire comprenant un tel actionneur électromécanique, notamment lorsque cet actionneur électromécanique, et par extension l'installation de fermeture, d'occultation ou de protection solaire toute entière, est capable de communiquer au moyen d'une liaison radio sans fil.

En variante, le moteur électrique de l'actionneur électromécanique peut être du type asynchrone ou à courant continu.

Selon des variantes particulièrement notables, les modes de réalisation peuvent être généralisés à d'autres types de grandeur électrique que le courant électrique consommé débité sur la sortie. En particulier, ces modes de réalisation peuvent être modifiés pour utiliser la tension électrique de sortie délivrée à la sortie du dispositif d'alimentation électrique, par exemple, la tension électrique entre la sortie 222 et la masse GND, à la place du courant électrique consommé débité sur la sortie. La fréquence de commutation est alors choisie en fonction de la valeur de tension électrique mesurée. Dès lors, les intervalles prédéterminés décrits ci-dessus sont remplacés par des intervalles prédéterminés de tension électrique.

On comprend également que le capteur 232 est remplacé par un capteur approprié, tel qu'un capteur de tension électrique. Par exemple, le capteur de tension est configuré pour mesurer, autrement dit mesure, la chute de tension entre la sortie 222 et la masse GND.

Mis à part ces différences, le procédé de régulation décrit ci-dessus fonctionne de façon analogue que celle basée sur la mesure du courant consommé.

La détection à partir du courant électrique consommé reste néanmoins avantageuse car particulièrement rapide et réactive.

De nombreuses modifications peuvent être apportées aux exemples de réalisation décrits précédemment sans sortir du cadre de l'invention défini par les revendications.

## Revendications

1. Dispositif d'alimentation électrique (200 ; 200') pour un actionneur électromécanique (11),
le dispositif d'alimentation électrique (200 ; 200') comprenant au moins :
- un convertisseur de puissance (210; 210') alternatif-continu à commutation, le convertisseur de puissance (210 ; 210') comprenant au moins un interrupteur de puissance (214 ; Q1, Q2) ;
- une sortie (222), la sortie (222) étant connectée en sortie du convertisseur de puissance (210 ; 210') ; et
- un dispositif de régulation (230) ;
le dispositif de régulation (230) comprenant au moins :
- un capteur (232), le capteur (232) étant configuré pour mesurer une grandeur électrique associée à la sortie (222) ; et
- un circuit de commande (234) ;
le circuit de commande (234) étant configuré pour :
- déterminer automatiquement une fréquence de commutation en fonction de la grandeur électrique mesurée par le capteur (232) ;
- commuter ledit au moins un interrupteur de puissance (214 ; Q1, Q2) avec la fréquence de commutation déterminée ; et
- déterminer la fréquence de commutation en identifiant, parmi une pluralité d'intervalles prédéterminés de valeurs de la grandeur électrique, l'intervalle prédéterminé à l'intérieur duquel la grandeur électrique mesurée est comprise, chaque intervalle prédéterminé étant associé à une valeur de fréquence de commutation, la fréquence de commutation déterminée étant celle associée à l'intervalle prédéterminé identifié ;
parmi les intervalles prédéterminés,
- un premier intervalle prédéterminé correspondant à des valeurs de la grandeur mesurée faibles et étant associé à une première valeur de fréquence de commutation, et
- un deuxième intervalle prédéterminé correspondant à des valeurs de la grandeur mesurée élevées et étant associé à une deuxième valeur de fréquence de commutation, la deuxième valeur de fréquence de commutation étant supérieure à la première valeur de fréquence de commutation ;
**caractérisé**
**en ce qu'**au moins un intervalle additionnel prédéterminé est défini, l'intervalle additionnel prédéterminé étant associé à une courbe de réponse prédéfinie de rendement énergétique associant des valeurs de la grandeur mesurée à des valeurs de fréquence de commutation,
et **en ce que** le circuit de commande (234) est configuré, lorsque l'intervalle additionnel prédéterminé est identifié comme correspondant à la valeur de la grandeur mesurée, pour déterminer la fréquence de commutation à partir de la courbe de réponse prédéfinie associée audit intervalle additionnel prédéterminé.

2. Dispositif d'alimentation électrique (200 ; 200') pour un actionneur électromécanique (11) selon la revendication 1, **caractérisé en ce que** l'intervalle additionnel prédéterminé est intercalé entre le premier intervalle prédéterminé et le deuxième intervalle prédéterminé.

3. Dispositif d'alimentation électrique (200 ; 200') pour un actionneur électromécanique (11) selon la revendication 1 ou selon la revendication 2, **caractérisé en ce que** la grandeur électrique est un courant électrique consommé débité sur la sortie (222) et **en ce que** le capteur (232) est un capteur de courant, le capteur (232) étant configuré pour mesurer le courant électrique consommé débité sur la sortie (222).

4. Dispositif d'alimentation électrique (200 ; 200') pour un actionneur électromécanique (11) selon la revendication 1 ou la revendication 2 et selon la revendication 3, **caractérisé en ce que** le premier intervalle prédéterminé correspond à des valeurs de courant inférieures ou égales à 1 milliampère.

5. Dispositif d'alimentation électrique (200 ; 200') pour un actionneur électromécanique (11) selon la revendication 1 ou la revendication 2 et selon la revendication 3 ou la revendication 4, **caractérisé en ce que** le deuxième intervalle prédéterminé correspond à des valeurs de courant supérieures ou égales à 500 milliampères.

6. Dispositif d'alimentation électrique (200 ; 200') pour un actionneur électromécanique (11) selon la revendication 1 ou selon la revendication 2, **caractérisé en ce que** la grandeur électrique est une tension électrique de la sortie (222) et **en ce que** le capteur (232) est un capteur de tension, le capteur (232) étant configuré pour mesurer une tension électrique de sortie fournie à la sortie (222).

7. Dispositif d'alimentation électrique (200 ; 200') pour un actionneur électromécanique (11) selon l'une quelconque des revendications 1 à 6, **caractérisé en ce que** le convertisseur de puissance (210 ; 210') est un convertisseur flyback.

8. Dispositif d'alimentation électrique (200 ; 200') pour un actionneur électromécanique (11) selon l'une quelconque des revendications 1 à 6, **caractérisé en ce que** le convertisseur de puissance (210 ; 210') est un convertisseur flybuck.

9. Actionneur électromécanique (11) pour une installation de fermeture, d'occultation ou de protection solaire (100), **caractérisé en ce que** l'actionneur électromécanique (11) comprend au moins un dispositif d'alimentation électrique (200 ; 200') selon l'une quelconque des revendications 1 à 8.

10. Installation de fermeture, d'occultation ou de protection solaire (100) comprenant un écran (2) entraîné en déplacement par un actionneur électromécanique (11), **caractérisée en ce que** l'actionneur électromécanique (11) est conforme à la revendication 9.
